(19) **Europäisches Patentamt**
**European Patent Office**
**Office européen des brevets**

(11) **EP 3 651 085 A1**

(12) # EUROPEAN PATENT APPLICATION

(43) Date of publication:
13.05.2020 Bulletin 2020/20

(51) Int Cl.:
*G06Q 10/00* *(2012.01)*

(21) Application number: 19207616.4

(22) Date of filing: 07.11.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 07.11.2018 TW 107139552

(71) Applicant: **Gamania Digital Entertainment Co., Ltd. 11494 Taipei City (TW)**

(72) Inventors:
• **HUANG, Wei**
**11494 Taipei City (TW)**
• **HSU, Min-yu**
**11494 Taipei City (TW)**

(74) Representative: **Becker & Kurig Partnerschaft Patentanwälte PartmbB Bavariastrasse 7 80336 München (DE)**

(54) **DATABASE ESTABLISHMENT AND ANALYSIS METHOD FOR THE BEHAVIOR FROM GAME**

(57) The invention provides a database establishment and analysis method for the behavior from game. Through a team game playing, the invention records images and voices of the different participants during the process. The examiner may assess the action performance of each player. Furthermore, combining the analysis of images and voices with the assessment to generalize a plurality of behavioral characteristics and establishing a behavior database for data learning of a classification model. Said classification model can be used to establish image and sound analyses, as well as the adjustment benchmark of standards, and further provide reference objective evaluation in personnel management.

EP 3 651 085 A1

## Description

## CROSS-REFERENCE TO RELATED APPLICATIONS

This non-provisional application claims priority under 35 U.S.C. §119 on Patent Application No. TW107139552 filed in Taiwan, Republic of China Nov. 7, 2018, the entire contents of which are hereby incorporated by reference in its entirety.

## FIELD OF THE INVENTION

The present invention relates to a database establishment and analysis method thereof, and more particularly to a database establishment and analysis method for the behavior from interactive game by obtaining the behavioral characteristics.

## BACKGROUND OF INVENTION

Description of Related Art

In recent years, in order to screen out the truly suitable talents, the enterprise not only refers to the resume data of the candidates, but also uses some tests or questions, such as cognitive (IQ) test or personality questionnaire test, to screen out the suitable candidates according to the test results. The cognitive (IQ) test is quick and easy, which can quickly get the IQ score of the subject. However, IQ is not equivalent to the ability to work. IQ-high subjects are not represented as truly suitable talents. The personality questionnaire test is quick and easy, and the subject's personality is roughly mastered. However, the subject may be inclined to produce a test result that meets the role expectation in order to meet the role expectation, rather than the true behavior of the subject.

Another commonly-used test method is the functional questionnaire test, which is quick and easy, and can tell whether the subjects understand the functions required by their work and roles. However, the results of the functional questionnaire test can only show that the subjects know the functions of their work, but it does not represent their real behavior. Another evaluation method is that the Entrusted Evaluation Center can issue the reports with rich content and high reference value, but the test is time-consuming and expensive. Another evaluation method is the group activity evaluation, through which the real interaction performance of the subjects can be seen, while the test is time-consuming and mostly subjective.

In summary, the traditional evaluation method cannot provide an objective and rapid evaluation report, nor can solve the problem that the subject excessively satisfies the social expectation, is unclear about himself, or the test result is inaccurate due to excessive stress.

## SUMMARY OF THE INVENTION

In view of this, the present invention provides a database establishment and analysis method for the behavior from game thereof, which can provide an objective and rapid evaluation report, and also can effectively solve the problem that the subject excessively satisfies the social expectation, is unclear about himself, or the test result is inaccurate due to excessive stress.

The present invention is provided by the appended claims. The following disclosure serves a better understanding of the invention. Accordingly, a database establishment method for game behavior according to an embodiment of the present disclosure includes the following steps: Step a. provide an interactive game with the plural roles and plural task instructions, when the plural users participate in the interactive game, each user acts as one of the roles and achieves the task instructions respectively or jointly; Step b. when the interactive game is going on, obtain the time-varying image information by a video camera, obtain the time-varying sound information by an audio recorder and obtain the game history record by a data recorder, then obtain the customer rating information by a rating module Step c. select a first user, identify the image and sound of the first user in the time-varying image information and the time-varying sound information, and obtain the first behavior characteristic information and the first communication characteristic information; Step d. obtain the first user's score from the customer rating information, and integrate the game history record, behavior characteristic information and communication characteristic information of the same user into the same time record to establish a first behavior performance file; and Step E. select the first n user and repeat the Step c. to d., until the user establishes a behavior performance file, access and establish a behavior database.

In some embodiments, the game history record has a plurality of data record items, the steps include f. during the interactive game, the game event executed by the player based on play rules is recorded, a game event record file is obtained; g. during the interactive game, the game object moving and rotating behaviors of the player on the game table are recorded, a game object variation record file is obtained; h. during the interactive game, the phasic change of game is recorded, the corresponding game event is generated, a game schedule file is obtained; i. the files of the aforesaid steps are integrated into a game history record based on time.

In some embodiments, a behavior recognition data model will be built, influencing most computing modes in the establishment steps, including j. select n behavioral databases, extract a behavior recognition data model; k. in the aforementioned embodiments, the data of steps c to e shall be influenced by behavior recognition data model. In some embodiments, when the database of behavior from game is established, the data accumulation based result is fed back, influencing the required data and rules in the establishment steps, including the following steps: 1. select m behavioral databases, extract a behavior recognition data model; m. the original and new behavior recognition data models are compared to find out the similarity, a behavior recognition data model error file is extracted; n. if the data model error file is larger than the warning threshold, a new model shall be used; o. behavior recognition data model content, the details of establishment steps are adjusted:

i.1. Adjust the marking standard of customer rating information.
i.2. Adjust the space conversion parameters based on data model in the behavior characteristic information.
i.3. Adjust the space conversion parameters based on data model in the communication characteristic information.
i.4. Adjust the space conversion parameters based on data model in the behavior performance file.

In some embodiments, the customer rating information has the plural test items, and the steps include: Step p. select a first test item, quantify the behavioral characteristic information of the different users, the communication characteristic information and the scores of the first test item, obtain a first relationship; Step q. select a nth test item, repeat Step p, until the relationship of the test items is established.

A game behavior analysis method according to another embodiment of the present disclosure includes the following steps: Step a. arrange a subject to participate in an interactive game with the plural roles and the plural task instructions, when the plural users participate in the interactive game, each user acts as one of the roles and achieves the task instructions respectively or jointly; Step b. when the interactive game is going on, obtain the time-varying image information, the time-varying sound information and the customer rating information; Step c. select the subject, identify the image and sound of the subject in the time-varying image information and the time-varying sound information, and obtain the first behavior characteristic information to be tested and the first communication characteristic information to be tested; and Step d. based on the above database, the relationship of the plural test items is obtained, and the information of the behavioral characteristics and the communication characteristics to be tested items are typed in to obtain the rating information of a subject.

In order to make the above purposes, features and advantages of the present invention more obvious and easy to be understood, the following embodiments are given and illustrated in detail with the attached diagram.

## BRIEF DESCRIPTION OF THE DRAWINGS

Fig.1 is a flow diagram for the database establishment method of the present invention.
Fig.2 is an embodiment of an interactive game of the present invention.
Fig.3 is a flow diagram for the relationship obtained for each test item of the present invention.
Fig.4a is an embodiment of an interactive behavior analysis method of the present invention.
Fig.4b is an embodiment of the capability display analysis method of the present invention.
Fig.5a is an embodiment of behavioral characteristic information acquisition of the present invention.
Fig.5b is an embodiment of obtaining head posture characteristics of the present invention.
Fig.5c is an embodiment of the facial motion feature acquisition of the present invention.
Fig.6a is an embodiment of the communicating characteristic information acquisition of the present invention.
Fig.6b is an embodiment of the acoustic expression characteristics acquisition of the present invention.
Fig.7 is a flow diagram for the behavior analysis method of the present invention.
Fig.8 is an embodiment of data model building and system improvement of the present invention.

## DETAILED DESCRIPTION OF THE INVENTION

A database establishment method for the behavior from game in the embodiments of the present invention comprises the following steps:

Step a1. An interactive game is provided, the interactive game comprises a game play code (D), a total time of game (T), a total number of players (P) and a game type (C); the interactive game has a plurality of roles and a plurality of task instructions, when a plurality of users participate in the interactive game, the plurality of users play any role respectively, and achieve a plurality of task instructions respectively or jointly;

Step a2. During the interactive game, a time-varying image information (Video_Info(x, y, t)), a player individual time-varying image information (Player_Video), a time-varying sound information (Audio_Info(t)), a player individual time-varying sound information (Player_Audio), a game history record (Game_Record (t)), a player individual game history record (Player Record) and a customer rating information (Evaluate_Info) are obtained; the time-varying image information contains a x image coordinate, a y image coordinate, the information contains a playtime (t) and a player code (p);

```
Game(C, D, T, P) ⊃ { Video_Info(x, y, t), Audio_Info(t), Game_Record(t),
Evaluate_Info(p) : t ∈ T, p ∈ P }
```

Step a3. selecting the first user, identify the player individual time-varying image information (Player_Video) and the player individual time-varying sound information (Player Audio) of the first user, calculating a behavior characteristic information (Behavior_Feature) to obtain the first user's a behavior characteristic information of and calculating a communication characteristic information (Communication_Feature) to obtain the first user's a communication characteristic information;

```
Behavior_Feature(p) = Σ Video_Info(x, y, t) ∩ Player_Video(p) + Audio_Info(t) ∩
Player_Audio(p)
```

```
Communication_Feature(p) = Σ Audio_Info(x, y, t) ∩ Player_Video(p) +
Audio_Info(t) ∩ Player_Audio(p)
```

Step a4. The score of the first user is obtained from the customer rating information, integrated with the game history record of the same user, the behavior characteristic information and the communication characteristic information are recorded at the same time, and creating a first behavior performance file of a n behavior performance file (Behavior_Expression_Info); and

```
Behavior_Expression_Info(p) = Game_Record(t) ∩ Player_Record(p) +
Behavior_Feature(p) + Communication_Feature(p) + Evaluate_Info(p)
```

Step a5. selecting an n user from the plurality of users, and repeating steps a3. to a4. such that the behavior performance file of the n user is created, and saving all the behavior performance file in a n behavior database;

```
Behavior_Database(C, D, P) = { Behavior_Expression_Info(p) : p ∈ P }
```

In some embodiments, the behavior database contains a behavior recognition data model (v), (v) is the behavioral data model version number), the behavior recognition data model influences the establishment of most computing modes in the steps, comprising the following steps:

Step a6. caculating the n behavior database to obtain a n behavior recognition data model;

```
Behavior_Recognition_Data_Model(v) = Σ Behavior_Database(C, D, P), D = 0...n, n
∈ N
```

Step a7. repeating steps a3. to a5. to obtain a n behavior performance file, a n behavior database and a m behavior recognition data model, and comparing the "m" behavior recognition data models to the "n" behavior recognition data model, then obtaining a standard error file; and

Step a8. when the standard error is less than or equal to a preset threshold, then output the m behavior performance file.

```
Difference_Table = Behavior_Recognition_Data_Model(new) -
Behavior_Recognition_Data_Model(original)
```

In the aforementioned embodiments, the data of Step a3. to Step a5. shall be influenced by the behavior recognition data model.

```
Behavior_Feature(p) = Behavior_Feature(p) + Behavior_Recognition_Data_Model(v)
```

```
Communication_Feature(p) = Communication_Feature(p) +
Behavior_Recognition_Data_Model(v)
```

```
Behavior_Expression_Info(p) = Behavior_Expression_Info(p) +
Behavior_Recognition_Data_Model(v)
```

In some embodiments, after the behavior database is created, the data accumulation based result is fed back, and the required data and rules in the establishment steps are influenced, comprising the following steps:

In some embodiments, "m" behavior databases are selected, the behavior recognition data model is extracted;

```
Behavior_Recognition_Data_Model(new) = Σ Behavior_Database(C, D, P), D = 0...m,
m ∈ N
```

The original and new behavior recognition data models are compared to find out the similarity, a behavior recognition data model error file (Difference_Table) is extracted;

If the behavior recognition data model's standard error is larger than a threshold, a new model shall be used;

```
Difference_Table <= threshold → Behavior_Recognition_Data_Model(v), v = original
```

```
Difference_Table > threshold → Behavior_Recognition_Data_Model(v), v = new
```

In some embodiments, the game history record has a plurality of data record items, the plurality of data record items collect through the following steps:

Step b1. During the interactive game, the game event executed by the player based on the play rules is recorded, a game event record file is obtained:

Step b2. During the interactive game, the game object moving and rotating behaviors of the player on the game table are recorded, a game object variation record file is obtained;

Step b3. During the interactive game, the game events corresponding to the phasic change of game are recorded, a game schedule file is obtained:

Step b4. The files of the aforementioned steps are integrated into the game history record based on time.

After the database of behavior from game is created, the data accumulation based result is fed back, and the required data and rules in the establishment steps and the behavior recognition data model content are influenced, the details of establishment steps are adjusted, comprising the following steps:

Step c.1. Adjust the marking standard of customer rating information.
Step c.2. Adjust the space conversion parameters based on data model in the behavior characteristic information.
Step c.3. Adjust the space conversion parameters based on data model in the communication characteristic information.
Step c.4. Adjust the space conversion parameters based on data model in the behavior performance file.

In some embodiments, the customer rating information has a plurality of test items, the steps include:

Step d1. A first test item is selected, the behavior characteristic information, the communication characteristic information and the first test item scores of different users are quantified, a first relation is obtained;
Step d2. An "$n^{th}$" test item is selected, Step d1 is repeated till the test items have established the relations thereof.

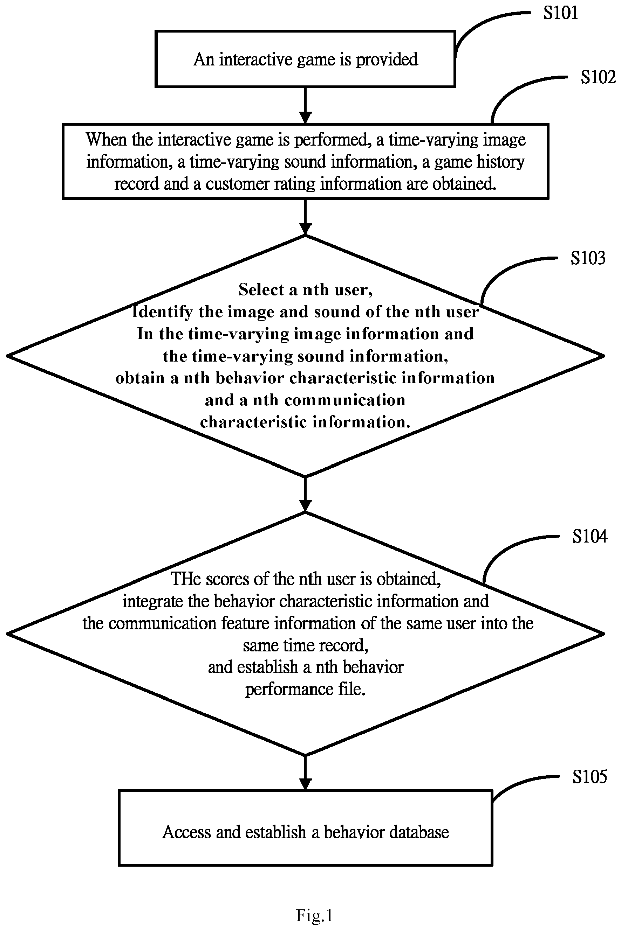

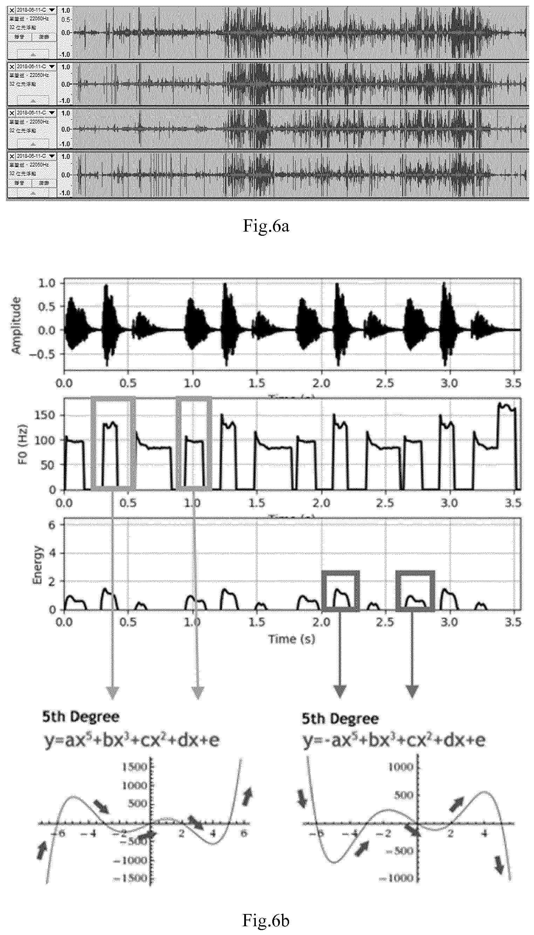

Please refer to Fig.1 and Fig.6.

Fig. 1 is a flow diagram of a method for establishing a database of the present invention. First, as shown in Step S101, an interactive game is provided; in an embodiment, the interactive game has the plural roles and plural task instructions, and when the plural users participate in the interactive game, these users respectively act as one of these roles and respectively or collectively achieve the specified task instructions.

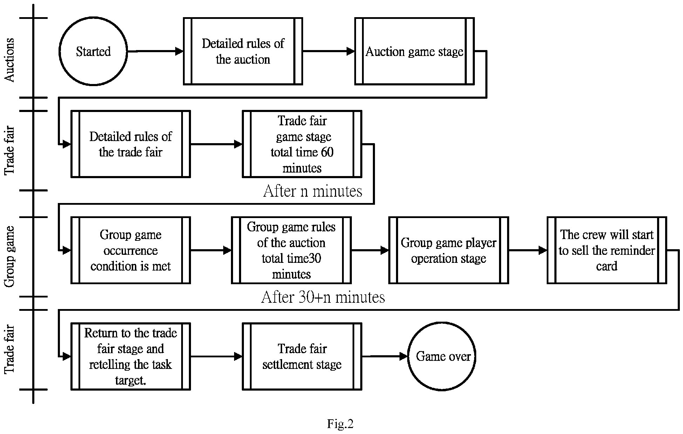

Fig. 2 is an embodiment of the interactive game of the present invention, but the present invention is not limited thereto. The interactive game may include three main interactive games of an auction, a trade fair, and a group game; in this embodiment, the theme of interactive game is the trading competition, if the player obtains the designated items through the transaction and tries to become the player with the highest total assets, this player can win. First, after the detailed rules of the auction are given, the auction game stage is started, and after all the items in the list are completed, the auction is completed, and the interactive game enters the trade fair stage.

At the trade fair stage, the captain will first brief the trade fair and issue the trade fair rules, and explain the contents of the rule description item by item. After that, enter the trade fair game stage to determine whether the group game occurrence condition is met, if not, then continue the trade fair stage; if the group game occurrence condition is met, begin the group game player operation stage after the captain explains the preliminary instructions and the issues the group game rules.

At the group game player operation stage, the crew will start to sell the reminder card, and then determine whether the group game end condition is met, if not, the group game will continue; if so, at the end of the group game, the group game reward and punishment will be given, and then, return to the trade fair stage, and the captain is responsible for retelling the task target. When the trade fair stage is used up, enter the settlement stage and the interactive game is over.

Then, as show in Step S102, when the interactive game is performed, a time-varying image information, a time-varying sound information, a game history record and a customer rating information are obtained. In some embodiments, the above time-varying image information and the time-varying sound information can be obtained/generated through an image capture device (e.g., a camera or a video camera), a recording unit (e.g., a microphone) and a computer device of a central processing unit to be included at least in the interactive game.

In an embodiment, the game history record mainly records the user action information of individual players or among several players, such as the frequency and number of times of the transaction or moving object in the trading game; a higher score indicates that the player is more aggressive.

In an embodiment, the customer rating information may be obtained by the ratings of one or more observers of the interactive game on the observed game activity status, wherein the customer rating information has the plural test items; first, select a first test item, quantify the plural behavior characteristic information, plural communication feature information and plural first test item scores of different users, obtain a first relationship, and then select the second test item in sequence, repeat the above steps until each test item establishes its relationship.

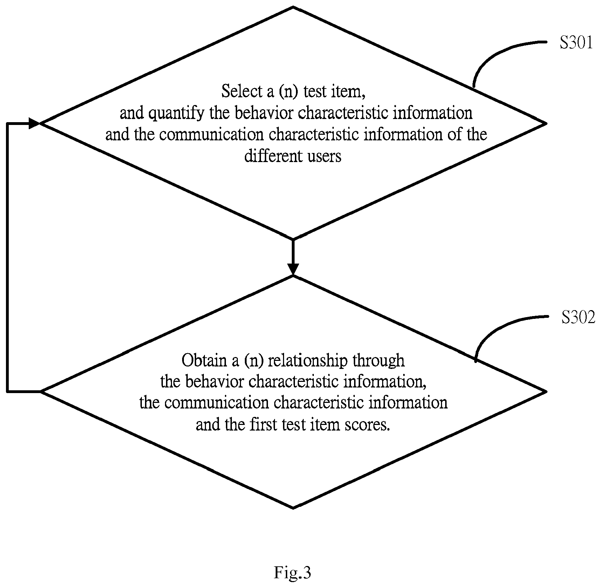

Fig. 3 is a flow diagram of the relationship between the test items of the present invention. As shown in Step S301, select a first test item, and quantify the behavior characteristic information and the communication characteristic information of the different users. Next, as shown in Step S302, obtain a first relationship through the behavior characteristic information, the communication characteristic information and the first test item scores. Sequentially, select a nth test item, and repeat Step S302 until the relationship between all test items is established.

For example, assume that there are first, second, and third test items, first select the first test item, quantify plural behavioral characteristics information, plural communication feature information and plural first test item scores of different users, obtain a first relationship; then select a second test item, quantify plural behavior characteristic information, plural communication feature information and plural second test item scores of different users, and obtain a second relationship; finally, select a third test item, quantify plural behavior characteristic information, plural communication feature information and plural second test item scores of different users, and obtain a third relationship.

After obtaining the above time-varying image information, the time-varying sound information, the game history record and the customer rating information, as shown in Step S103, select a nth user, identify the image and sound of the nth user in the time-varying image information and the time-varying sound information, obtain a nth behavior characteristic information and a nth communication characteristic information.

For example, if n is 1, Step S103 is a selected first user A, identify the image and sound of the first user A in the time-varying image information and the time-varying sound information obtained in Step S102, and obtain a first behavior characteristic information and a first communication feature information corresponding to the first user A; if n is 2, Step S103 is a selected second user B, and identify the image and sound of the second user B in the time-varying image information and the time-varying sound information obtained in Step S102, obtain a second behavior characteristic information and a second communication feature information of the second user B, and so on.

Then, as shown in Step S104, the scores of the nth user is obtained from the customer rating information, integrate the behavior characteristic information and the communication feature information of the same user into the same time record, and establish a nth behavior performance file. Next, select a first nth+1 user, repeat Step S103 and S104 until behavioral performance files are established for all users, as shown in Step S105, access and establish a behavior database.

For example, if n is 3, the above step is the scores of the first user A obtained from the customer rating information, integrate the behavior characteristic information and the communication feature information of the same user A into the same time record, and establish a first behavior performance file; then, select the second user B, identify the image and sound of the second user B obtained in the time-varying image information and the time-varying sound information, obtain a second behavior characteristic information and a second communication characteristic information corresponding to the second user B, obtain the scores of the second user B from the customer rating information, integrate the behavior characteristic information and the communication feature information of the same user B into the same time record, and establish a second behavior performance file; then select the third user C, identify the image and sound of the third user C obtained in the time-varying image information and the time-varying sound information, obtain a third behavior characteristic information and a third communication characteristic information corresponding to the third user C, obtain the scores of the third user C from the customer rating information, integrate the behavior characteristic information and the communication feature information of the same user C into the same time record, and establish a third behavior performance file. Then, access and establish a behavior database, wherein, the behavior database includes the first, second and third behavior performance files corresponding to user A, B and C.

After that, the first, second and third behavioral performance files corresponding to the users A, B and C can be analyzed, and the artificial intelligence (AI) interactive behavior and/or ability presentation analysis are performed through the relationship, artificial intelligence (AI) operation and machine learning of each test item, to obtain the rating information of each subject, and then find the best candidate according to the needs and the rating information of each subject.

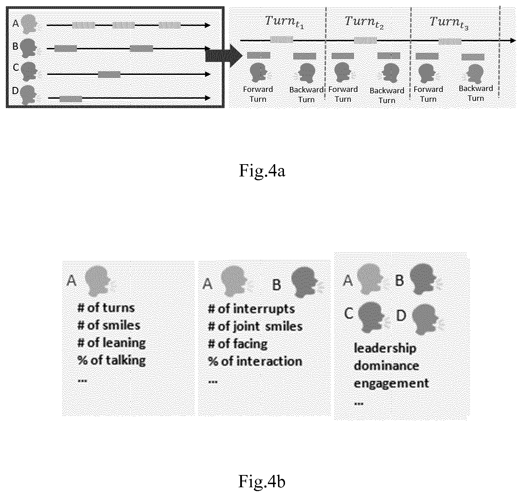

In some embodiments, the above test item includes an interactive behavior analysis, and the relationship is taken from the directional action of the behavior characteristic information and the communication feature information of each user to be tested, as shown in Fig. 4a, multi-person communication interaction calculation can be performed according to the conversation voice and the facial-limb image signal, to obtain the directional action of the tested user A, B, C and D in their corresponding behavior characteristic information and communication characteristic information (e.g., each user's head rotation direction in the interactive image of each conversation time cycle t1, t2 and t3) for interactive behavior analysis.

In some embodiments, the above test items include a capability presentation analysis, and the relationship is taken from the spontaneous action of each user to be tested in the behavior characteristic information and the communication feature information, as shown in Fig. 4b. The multi-person communication interaction calculation can be performed according to the conversation voice and the facial-limb image signal, to obtain the spontaneous action of each subject in their corresponding behavior characteristic information and communication characteristic information, for example: each user's head and/or facial rotation times, facial smile times, oblique times, conversation times, interruption times in the conversation and the interaction times in the interactive image of each conversation time cycle t1, t2 and t3 as well as the commander in each conversation, and the dominator is those who are tested and so on.

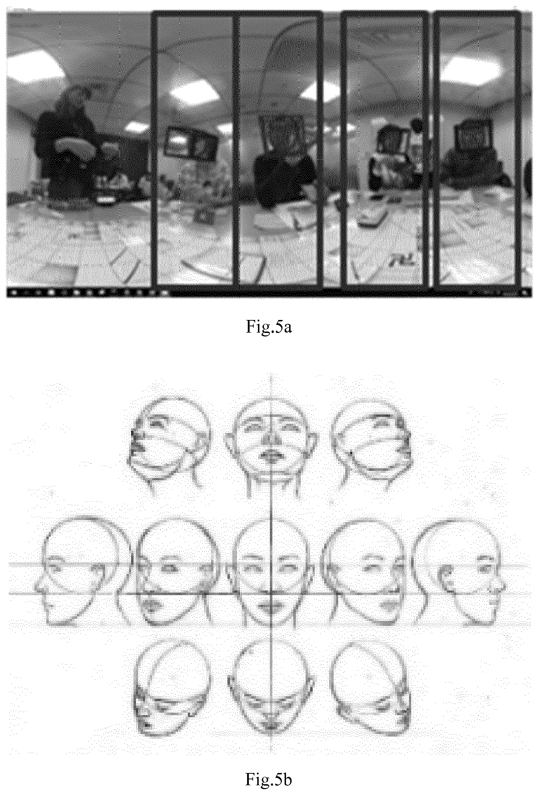

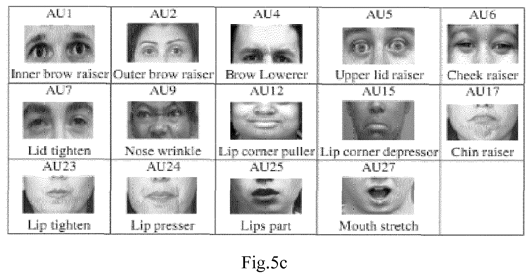

In some embodiments, the above behavior characteristic information includes a head posture feature, a facial motion feature or a body posture feature, as shown in Fig. 5a. The 360° video image in the interactive game can be obtained through an image capturing device such as a video camera. The 360° video image is further subjected to a multi-mode signal, to obtain the corresponding behavior characteristic information of each subject. The above behavior characteristic information includes a head posture feature, a facial motion feature or a body posture feature. After that, through the signal value behavior characteristic calculation, the head posture evaluation is performed to obtain the head posture feature as shown in Fig. 5b, and then the facial motion unit detection is performed to obtain the facial motion feature as shown in Fig. 5c.

In some embodiments, the above communication feature information includes an acoustic expression feature, as shown in Fig. 6a. The acoustic feature information of each subject can be separately obtained. For example, in an embodiment, each subject can be separately provided with a microphone, and then records the sound signals of the microphones to obtain the acoustic characteristic information of each subject, but the present invention is not limited thereto. After that, according to the acoustic characteristics information of each subject as shown in Fig.6a, the acoustic feature extraction technology of dynamic temperament structure feature extraction is performed for the multi-person conversation voice signal through the signal recognition technologies, such as signal analysis, deep learning and/or machine learning techniques, to obtain the acoustic expression characteristics as shown in Fig. 6b.

In some embodiments, the above relationship may be obtained by the pattern recognition and deep learning of a Bi Long-Short Term Memory (BLSTM), Support Vector Machine (SVM), and Back Propagation Neural Network (BPNN).

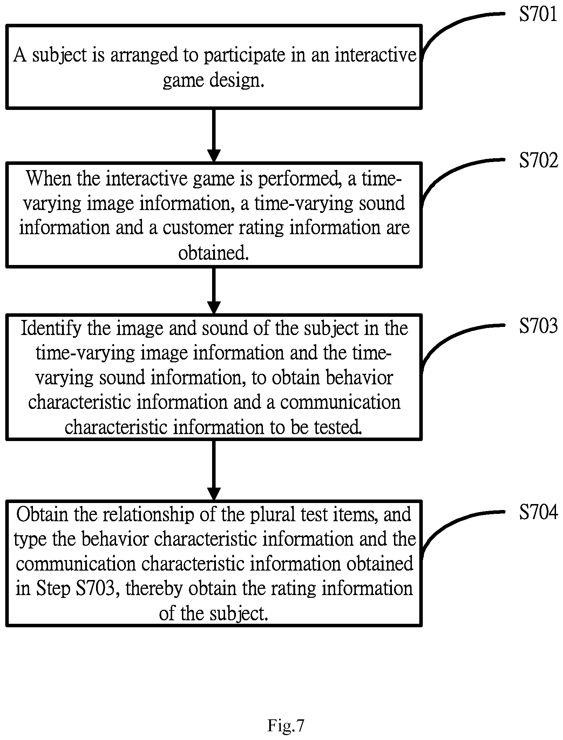

Please refer to Fig.7

Fig. 7 is a flow diagram of the game behavior analysis method of the present invention. First, as shown in Step S701, a subject is arranged to participate in an interactive game design. In some embodiments, the interactive game is an interactive game with the plural roles and plural task instructions. When the plural users participate in an interactive game, all users respectively act as one of these roles, and respectively or collectively achieve all task instructions.

As shown in Step S702, when the interactive game is performed, a time-varying image information, a time-varying sound information and a customer rating information are obtained. In some embodiments, the time-varying image information and the time-varying sound information can be obtained/generated in the interactive game through an image capturing device (for example: a camera or video camera), a recording unit (e.g., a microphone), and a computer device of a central processing unit at least.

Then, as shown in Step S703, select the above subject and identify the image and sound of the subject in the time-varying image information and the time-varying sound information, to obtain behavior characteristic information and a communication characteristic information to be tested. In some embodiments, the behavior characteristic information to be tested includes a head posture feature, a facial motion feature or a body posture feature. In some embodiments, the communication feature information to be tested includes an acoustic expression feature.

After that, as shown in Step S704, obtain the relationship of the plural test items, and type the behavior characteristic information and the communication characteristic information obtained in Step S703, thereby obtain the rating information of the subject. In some embodiments, the relationship can be obtained from the former behavior database.

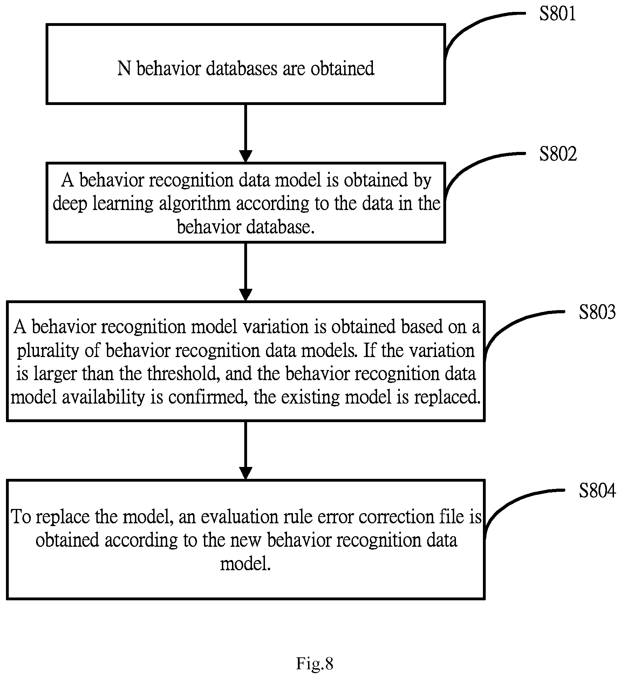

Please refer to Fig. 8.

Fig. 8 is the flow diagram of game data model building and system improvement of the present invention. First of all, as Step S801, N behavior databases are obtained. In some embodiments, the number of behavior databases influences the model classification range of deep learning, so unequal quantities of behavior databases are selected according to the required model use, different data models can be generated.

As Step S802, a behavior recognition data model is obtained by deep learning algorithm according to the data in the behavior database. In some embodiments, the number of behavior databases selected by S801 is obtained, the first behavior database is obtained, a first behavior database data feature is obtained by statistical analysis algorithm. The aforementioned steps are repeated till the behavior database data feature is extracted from N behavior databases, the behavior recognition data model is accessed and built.

As Step S803, a behavior recognition model variation is obtained based on a plurality of behavior recognition data models. If the variation is larger than the threshold, and the behavior recognition data model availability is confirmed, the existing model is replaced. In some embodiments, two quantities of behavior databases are selected, Steps S801 to S802 are repeated, a first behavior recognition data model and a second behavioral data recognition model are built. A behavior recognition model variation table is obtained according to the similarity between two behavior seniority recognition models. If any field data in the behavior recognition model variation table is larger than the threshold, and the algorithm influenced by the behavior recognition data model has no exceptional result, one behavior recognition data model is selected as normal behavior recognition data model.

As Step S804, to replace the model, an evaluation rule error correction file is obtained according to the new behavior recognition data model. In some embodiments, changing the normal behavior recognition data model will influence the feature information relation of customer rating information test items. The first behavior recognition data model is selected, Steps S703 to S704 are repeated, a first data group is obtained. Afterwards, a second behavior recognition data model is selected, Steps S703 to S704 are repeated, a second data group is obtained; the first and second data groups are compared, an evaluation rule error correction file is obtained, according to which the file is corrected, the details of the algorithm are adjusted.

Through the method for establishing the game behavior database and the analysis method for the related game behavior of the present invention, the enterprise can carry out the related interactive game design according to the talent selection item, and the interactive game is taken as the core, so that the participants can wholeheartedly devote themselves to the interactive game; and then through the interaction between the AI and the psychology of the present invention, analyze the interactive behavior performance of the participants in the interactive game, to obtain the rating information of each subject, which can provide an objective and rapid evaluation report on the one hand, and solve the problem of excessively satisfying the social expectation on the other hand. The inaccurate test results are caused by lack of understanding of oneself or excessive tension.

Therefore, according to the establishment method of the behavior database of this case and its related behavior analysis method, the true self and the specific ability of the subject can be seen through the behavior performance of the interactive game in a very short time. The real behavior revelation of the subject interacted and communicated with others can seen through the interactive game design situation, thus giving the professional and objective analysis, and then assisting the enterprise to screen out the truly suitable talents.

The method of the present invention, or a specific type or its part thereof, may exist in the form of a program code. The program code may be included in a physical medium such as a floppy disk, a compact disk, a hard disk, or storage medium that can be read by any other machine (such as a computer), or a computer program product not limited to an external form, wherein when the program code is loaded and executed by a machine, such as a computer, the machine becomes a device for participating in the present invention. The program code can also be transmitted via some transmission medium, such as a wire or cable, optical fiber, or any transmission type, wherein the machine becomes the device of the present invention when the program code is received, loaded and executed by a machine, such as a computer. When the program code is executed in a general purpose processing unit, the program code in combination with the processing unit provides a unique device of the operation similar to the applied specific logic circuit.

Although the present invention has been disclosed as above in better embodiments, but it is not intended to limit the present invention. Any artist familiar with the art, without departing from the spirit and scope of the present invention, can make some changes and embellishments. Therefore, the protection scope of the present invention shall be determined by the scope of the patent application attached thereto.

**Claims**

1. A method for establishing a database of game behavior, comprising the steps of:

a1. providing an interactive game, including a game session code (D), a total game time (T), a total number of players (P), and a game category (C); wherein the interactive game includes a plurality of users which participate in the interactive game and a plurality of task instructions, wherein, when the plurality of users participate in the interactive game, the plurality of users play a role respectively, and achieve the plurality of task instructions respectively or jointly;

a2. during the interactive game, obtaining a time-varying image information (Video_Info(x, y, t)), a time-varying image information of individual players (Player_Video), a time-varying sound information (Audio_Info(t)), a time-varying sound information of individual players (Player_Audio), a game history record (Game_Record(t)), a game history record of individual players (Player_Record), and a customer rating information (Evaluate_Info(p)); wherein the time-varying image information includes an x image coordinate, a y image coordinate; the time-varying image information further includes a game time (t) and a player code (p);

a3. selecting a first user, identifying the player individual time-varying image information (Player Video) and the player individual time-varying sound information (Player Audio) of the first user, calculating a behavior characteristic information (Behavior_Feature) to obtain the first user's behavior characteristic information, and calculating a communication characteristic information (Communication_Feature) to obtain the first user's communication characteristic information;

a4. obtaining the score of the first user from the customer rating information, integrated with the game history record of the same user, recording the behavior characteristic information and the communication characteristic information at the same time, and creating a first behavior performance file of a n behavior performance file (Behavior_Expression_Info);

a5. selecting an n user from the plurality of users, and repeating steps a3. to a4. such that the behavior performance file of the n user is created, and saving all the behavior performance file in a n behavior database;

a6. caculating the n behavior database to obtain a n behavior recognition data model;

a7. repeating steps a3. to a5. to obtain a n behavior performance file, a n behavior database and a m behavior recognition data model, and comparing the m behavior recognition data models to the n behavior recognition data model, then obtaining a standard error file; and

a8. when the standard error is less than or equal to a preset threshold, then output the m behavior performance file.

**2.** The method of Claim 1, wherein the game history record includes a plurality of information record items, and further comprises the steps:

b1. obtaining a game event record file during the interactive game, in which the game event performed by the player based on the play rules is recorded:

b2. obtaining a game object variation record file during the interactive game, in which the game object moving and rotating behaviors of the player on a game table are recorded;

b3. obtaining a game schedule file during the interactive game, in which the game events corresponding to the phasic change of game are recorded; and

b4. Integrating the files of the aforementioned steps b1.-b3. into the game history record based on time.

**3.** The method of Claim 1, wherein the step a8. when the standard error is larger than the preset threshold, , wherein the n behavior recognition data model are adjusted by the following steps:

c1. adjusting the marking standard of customer rating information;

c2. adjusting the space conversion parameters based on data model in the behavior characteristic information;

c3. adjusting the space conversion parameters based on data model in the communication characteristic information; and

c4. adjusting the space conversion parameters based on data model in the behavior performance file.

**4.** The method of Claim 1, wherein the customer rating information has a plurality of test items, the method further comprising the steps of:

d1. selecting a first test item, quantifying the behavioral characteristics information, the communication characteristics information and the scores of said first test item for different users, and obtaining a first relationship there between; and

d2. selecting a n test item and repeat Step d1 until these test items establish their relationship.

**5.** The method of Claim 4, wherein said test items include an interactive behavior analysis, and the relationship is taken from the directional behavior of the user's behavioral information and the communication feature information.

**6.** The method of Claim 4, wherein said test items include a capability presentation analysis, and the relationship is taken from the spontaneous action of the user in the behavior characteristic information and the communication characteristic information.

**7.** The method of Claim 4, wherein the behavior characteristic information includes a head posture feature, a facial motion feature or a body posture feature.

**8.** The method of Claim 4, wherein the communication feature information includes an acoustic expression feature.

**9.** The method of Claim 4, wherein, the relationship is obtained by pattern recognition and deep learning of Bi Long-Short Term Memory (BLSTM), Support Vector Machine (SVM), and Back Propagation Neural Network (BPNN).

**10.** Analysis method of a game behavior, comprising the steps of:

e1. arranging a subject to participate in an interactive game with the plural roles and the plural task instructions, when the plural users participate in the interactive game, wherein each user acts as one of the roles and achieves the task instructions respectively or jointly;

e2. when the interactive game is going on, obtaining a time-varying image information, a time-varying sound information and a customer rating information;

e3. Selecting a user as a subject, identifying the image and sound of the subject in the time-varying image information and the time-varying sound information, and obtaining the first behavior characteristic information to be tested and the first communication characteristic information to be tested; and

e4. from the behavior database described in claim 4, obtaining the relationship of the plural test items, and obtaining the rating information of a subject by typing in the information of the behavioral characteristics and the communication characteristics to be tested items .

S101

An interactive game is provided

S102

When the interactive game is performed, a time-varying image information, a time-varying sound information, a game history record and a customer rating information are obtained.

S103

Select a nth user,
Identify the image and sound of the nth user
In the time-varying image information and
the time-varying sound information,
obtain a nth behavior characteristic information
and a nth communication
characteristic information.

S104

THe scores of the nth user is obtained,
integrate the behavior characteristic information and
the communication feature information of the same user into the
same time record,
and establish a nth behavior
performance file.

S105

Access and establish a behavior database

Fig.1

Fig.2

S301

Select a (n) test item,
and quantify the behavior characteristic information
and the communication characteristic information of the
different users

S302

Obtain a (n) relationship through
the behavior characteristic information,
the communication characteristic information
and the first test item scores.

Fig.3

Fig.4a

Fig.4b

Fig.5a

Fig.5b

Fig.5c

Fig.6a

Fig.6b

S701

A subject is arranged to participate in an interactive game design.

S702

When the interactive game is performed, a time-varying image information, a time-varying sound information and a customer rating information are obtained.

S703

Identify the image and sound of the subject in the time-varying image information and the time-varying sound information, to obtain behavior characteristic information and a communication characteristic information to be tested.

S704

Obtain the relationship of the plural test items, and type the behavior characteristic information and the communication characteristic information obtained in Step S703, thereby obtain the rating information of the subject.

Fig.7

N behavior databases are obtained — S801

A behavior recognition data model is obtained by deep learning algorithm according to the data in the behavior database. — S802

A behavior recognition model variation is obtained based on a plurality of behavior recognition data models. If the variation is larger than the threshold, and the behavior recognition data model availability is confirmed, the existing model is replaced. — S803

To replace the model, an evaluation rule error correction file is obtained according to the new behavior recognition data model. — S804

Fig.8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/280802 A1 (STROUD MICAH S [US]) 4 October 2018 (2018-10-04) * paragraphs [0007] - [0026], [0049] - [0091]; figures 1-7 * ----- | 1-10 | INV. G06Q10/00 |
| X | US 2018/243656 A1 (AGHDAIE NAVID [US] ET AL) 30 August 2018 (2018-08-30) * paragraphs [0003] - [0006], [1221] - [0150]; figures 1-11 * ----- | 1-10 | |

TECHNICAL FIELDS
SEARCHED    (IPC)

G06Q

The present search report has been drawn up for all claims

| Place of search | Date of completion of the search | Examiner |
|---|---|---|
| Munich | 9 January 2020 | Bîrlescu, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                 
& : member of the same patent family, corresponding
    document

EPO FORM 1503 03.82 (P04C01)

**EP 3 651 085 A1**

## ANNEX TO THE EUROPEAN SEARCH REPORT
## ON EUROPEAN PATENT APPLICATION NO.

EP 19 20 7616

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2020

| Patent document cited in search report | | Publication date | Patent family member(s) | | Publication date |
|---|---|---|---|---|---|
| US 2018280802 | A1 | 04-10-2018 | CN | 110536725 A | 03-12-2019 |
| | | | EP | 3600580 A1 | 05-02-2020 |
| | | | US | 2018280802 A1 | 04-10-2018 |
| | | | WO | 2018182992 A1 | 04-10-2018 |
| US 2018243656 | A1 | 30-08-2018 | CN | 108499108 A | 07-09-2018 |
| | | | KR | 20180099532 A | 05-09-2018 |
| | | | US | 2018243656 A1 | 30-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 107139552